# EUROPÄISCHE PATENTSCHRIFT

(11) **EP 2 949 462 B1**
(45) Veröffentlichungstag und Bekanntmachung des Hinweises auf die Patenterteilung: **10.10.2018**
(21) Anmeldenummer: 15158803.5
(22) Anmeldetag: 12.03.2015
(51) Int. Cl.: B32B 7/14, B32B 27/12, B32B 27/30, B32B 27/32, B32B 27/40, B32B 3/10, B32B 3/26, C09K 3/10, E02D 29/00, E02D 31/02, E04B 1/64, E04B 1/66, E04B 1/68

(54) **FLÄCHENABDICHTELEMENT FÜR BAUKÖRPER**
SURFACE SEALING ELEMENT FOR BUILDING OBJECTS
ÉLÉMENT D'ÉTANCHÉITÉ DE SURFACE POUR CORPS DE CONSTRUCTION

(30) Priorität: 27.05.2014 DE 102014107424
(43) Veröffentlichungstag der Anmeldung: 02.12.2015
(73) Patentinhaber: Max Frank GmbH & Co. KG, 94339 Leiblfing (DE)
(72) Erfinder: Feldmeier, Josef, 94365 Parkstetten (DE); Gürster, Helmut, 94363 Oberschneiding (DE); Weißenbach, Nils, 34128 Kassel (DE)
(74) Vertreter: Glück Kritzenberger Patentanwälte PartGmbB

(56) Entgegenhaltungen:
- WO-A1-2005/045152
- WO-A1-2009/106500

## Beschreibung

### Technisches Gebiet

Die Erfindung bezieht sich auf ein Flächenabdichtelement für Baukörper.

### Stand der Technik

Bei der Erstellung von Baukörpern tritt das Problem auf, den Baukörper gegen eindringende Feuchtigkeit und Wasser abzudichten. Baukörper im Erdboden wie Fundament, Bodenplatte und gesamter Kellerbereich eines Gebäudes müssen gegenüber Bodenfeuchtigkeit sowie drückendem und nichtdrückendem Wasser aber auch gegen das Eindringen von Gas dicht sein. Werden zur Errichtung der Außenwände des Baukörpers Betonfertigteile, wie etwa Beton-Doppelwandelemente verwendet, so ergeben sich an den Verbindungsstellen zwischen den Doppelwandelementen wie auch an den Verbindungsstellen von Doppelwandelementen und Bodenplatte Fugen, die geeignet abgedichtet werden müssen.

Bei einem unter dem Schlagwort "Schwarze Wanne" bekannten Abdichtverfahren wird die gesamte Außenfläche des in wasserführendem Erdreich eingelassenen Baukörpers abgedichtet. Dazu wird der Baukörper auf seiner Grundfläche und an seinen Seitenwänden mit Flächenabdichtelementen versehen und so wasserdicht eingepackt. An den Fugen zwischen den Betonteilen müssen die Flächenabdichtungen dabei sorgfältig verlegt und verschweißt sein, um ein Eindringen von Wasser zu vermeiden.

Flächenabdichtelemente werden üblicherweise an der dem Ortbeton zugewandten Oberfläche der Schalungswandung angebracht und gehen nach dem Vergießen einen festen Verbund mit dem Frischbeton ein. Die Flächenabdichtelemente bleiben nach dem Ausschalen an der Außenseite des betonierten Bereichs haften und bilden so eine Flächenabdichtung aus.

Aus der GB 2 340 070 B2 ist eine Flächenabdichtung aus einer steifen Kunststoffplatte mit einer darauf angeordneten Gitterstruktur bekannt. Diese Flächenabdichtung ist sehr unflexibel in der Handhabung, wodurch ein vollständiges Abdichten von z.B. Ecken nicht möglich ist. Außerdem kann an gewölbten Flächen kein gleichmäßiger Kontakt zum Frischbeton hergestellt werden. Durch die starre Ausbildung der Platte wird der Transport an die Baustelle deutlich erschwert. Einen weiteren Nachteil stellt die Ausbildung der Flächenabdichtung in Form von Platten dar. Dadurch werden zusätzliche Arbeitsschritte erforderlich wie z.B. das Verbinden der einzelnen Platten untereinander sowie ein Zuschneiden und Einfügen von Zwischenstücken zur Anpassung an die Gestalt der Schalung.

Die EP 2 349 707 B1 offenbart eine Flächenabdichtung bestehend aus einer Schottschicht, einer Verbundschicht und einem zwischen Verbundschicht und Schottschicht diskontinuierlich angeordneten Dichtmittel. Als Schottschicht wird eine flexible Kunststofffolie eingesetzt, während als Verbundschicht ein Filz oder ein Vlies verwendet wird. Bei dem Dichtmittel handelt es sich um einen Haft- oder Schmelzklebstoff. Das auf der Kunststofffolie angebrachte Vlies lässt Frischbeton teilweise durchdringen. Durch den diskontinuierlichen Auftrag des Dichtmittels wird eine Vielzahl von Gitterzellen geschaffen, von denen jede einzelne von Dichtmittel umschlossen ist. Im Falle eines Lecks in der Schottschicht wird dadurch die Ausbreitung von eindringendem Wasser verhindert, da dieses in der Gitterzelle eingeschlossen bleibt. Nachteilig an dieser Flächenabdichtung ist die Tatsache, dass die Folie aufgrund des diskontinuierlich aufgebrachten Dichtmittels nur sehr schlecht am Frischbeton haften bleibt und ohne viel Kraftaufwand wieder abgezogen werden kann. Durch diesen nicht festen Verbund wird auch die Hinterlaufsicherheit stark geschwächt. Außerdem geht das Vlies im Allgemeinen keinen guten Verbund mit dem Frischbeton ein.

Die DE 692 13 507 T2 beschreibt eine Flächenabdichtung mit einer Trägerschicht, auf der vollflächig eine Haftklebeschicht aufgebracht ist. Auf der Klebeschicht ist ein Vlies angeordnet, welches den Frischbeton weit genug eindringen lässt um mit der Haftklebeschicht einen Verbund einzugehen. Nachteilig an dieser Flächenabdichtung ist die Tatsache, dass das Vlies keinen guten Verbund mit dem Frischbeton eingeht. Außerdem kann sich bei einer Beschädigung der Folie Wasser zwischen dem Vlies und dem Frischbeton ansammeln und verteilen, womit eine Hinterlaufsicherheit nicht immer gegeben ist.

Die WO 2009/106500 A1 offenbart ein mehrschichtiges Verbundmaterial für Verpackungen. Das Verbundmaterial besteht aus einer Kunststoff- oder Metallfolie, einer Verbindungsschicht, einer Kapillaren aufweisenden Polyurethanschicht sowie einer Verbindungsschicht auf Basis eines gehärteten organischen Klebstoffs oder eines Klebenetzes. Das aus der WO 2009/106500 A1 bekannte Verpackungsmaterial weist ein ansprechendes optisches Äußeres und eine angenehme Haptik auf und ist unempfindlich gegen Fingerabdrücke, Schweißflecken und Feuchtigkeit.

Aus der WO 2005/045152 A1 ist ein mehrschichtiges Entkopplungs-, Abdichtungs- und Drainagesystem bekannt. Das System weist einen Schichtaufbau auf mit einer aus einem ersten gitterartigen Strukturelement gebildeten Drainageschicht, einer flüssigkeitsdurchlässigen Vliesschicht, einer aus einem zweiten gitterartigen Strukturelement gebildeten Verankerungsschicht und einer an der Verankerungsschicht zumindest abschnittsweise fest angeordneten Armierungsschicht.

Obwohl sich im Stand der Technik eine Vielzahl von Lösungsvorschlägen findet, bleibt die Flächenabdichtung von Baukörpern im Erdboden weiterhin ein Problem. Über die Lebenszeit eines Bauwerks betrachtet genügen schon geringste Mengen an eindringendem Wasser oder Feuchtigkeit um eine langsame Korrosion der Armierung zu bewirken. Die in Folge auftretenden, in ihrem Ausmaß nicht vorhersagbaren Bauschäden bilden ein nicht tolerierbares Problem im Betonbau.

### Darstellung der Erfindung

Hier setzt die Erfindung an. Es soll ein Flächenabdichtelement für Baukörper zur Verfügung gestellt werden, das einfach handhabbar ist und eine sichere Abdichtung der Bauwerke gegen Wasser und Feuchtigkeit gewährleistet. Diese Aufgabe wird erfindungsgemäß durch das Flächenabdichtelement gemäß unabhängigem Anspruch 1 gelöst. Weitere vorteilhafte Aspekte, Details und Ausgestaltungen der Erfindung ergeben sich aus den abhängigen Ansprüchen, der Beschreibung sowie den Zeichnungen.

Die vorliegende Erfindung stellt ein Flächenabdichtelement für Baukörper zur Verfügung. Das Flächenabdichtelement weist einen flächigen Träger, eine auf dem flächigen Träger aufgeklebte, mit Klebstoff getränkte, textile Schicht und eine auf der dem flächigen Träger abgewandten Oberfläche der textilen Schicht angeordnete, Durchbrechungen aufweisende Gitterschicht auf, wobei die Gitterschicht aus sich kreuzenden, stabförmigen Gitterelementen aufgebaut ist. Bei dem flächigen Träger handelt es sich um eine Kunststofffolie.

Das erfindungsgemäße Flächenabdichtelement zeigt ganz ausgezeichnete Eigenschaften bei der Abdichtung von Baukörpern gegen Wasser und Gas. Durch die Kunststofffolie wird das Eindringen von Gas und/oder Wasser verhindert, es handelt sich also um einen im Wesentlichen gas- und/oder wasserdichten flächigen Träger. Die auf der Kunststofffolie aufgeklebte, mit Klebestoff getränkte, textile Schicht ist fest mit der Durchbrechungen aufweisenden Gitterschicht verbunden. Da die textile Schicht mit Klebstoff getränkt ist, sammelt sich an der der Gitterschicht zugewandten Oberfläche der textilen Schicht in den Durchbrechungen des Gitters eine gewisse Menge an Klebstoff an. Dieser Klebstoff geht beim Vergießen des Ortbetons einen Verbund mit dem Frischbeton ein, wodurch eine zusätzliche Abdichtung erfolgt.

Der Klebstoff erfüllt somit zwei Aufgaben, er sorgt zum einen für eine dauerhafte Verbindung von Kunststofffolie und textiler Schicht und zum anderen für einen Verbund von Frischbeton und textilem Träger. Das textile Flächengebilde stellt dabei eine Hilfslage dar, welche einerseits dafür sorgt, dass der flächige Träger vollflächig mit der Gitterschicht verklebt werden kann, und die andererseits den Klebstoff an die der Gitterschicht zugewandten Oberfläche der textilen Schicht transportiert, sodass dieser dort einen Klebeverbund mit dem Frischbeton herstellen kann.

Durch die auf der dem flächigen Träger abgewandten Oberfläche der textilen Schicht angeordnete, aus sich kreuzenden, stabförmigen Gitterelementen aufgebaute, Durchbrechungen aufweisende Gitterschicht wird ein mechanischer Verbund mit dem Frischbeton sichergestellt. Die besonders guten Eigenschaften des erfindungsgemäßen Flächenabdichtelements sind somit wahrscheinlich darauf zurückzuführen, dass das Flächenabdichtelement gleichzeitig einen mechanischen Verbund und einen Klebeverbund mit dem Frischbeton eingeht.

Die erfindungsgemäß vorgesehene Gitterschicht ist aus sich kreuzenden, stabförmigen Gitterelementen aufgebaut. Diese stabförmigen Gitterelemente können an ihren Kreuzungspunkten grundsätzlich in beliebiger Weise relativ zueinander angeordnet sein. So können beispielsweise alle quer verlaufenden Gitterelemente in einer ersten Ebene angeordnet sein, während alle längs verlaufenden Gitterelemente in einer zweiten Ebene angeordnet sind. Ebenso können beispielsweise die quer verlaufenden Gitterelemente abwechselnd über bzw. unter den längs verlaufenden Gitterelementen geführt werden und so eine Art Geflecht bilden. Insbesondere bei Kunststoffgitterelementen ist es auch möglich, dass alle quer und alle längs verlaufenden Gitterelemente in derselben Ebene angeordnet sind.

Vorteilhaft weisen die die Gitterschicht aufbauenden stabförmigen Gitterelemente im Schnitt senkrecht zur Gitterebene und senkrecht zur Hauptachse des Gitterelements eine bikonvexe Form auf. Bei einer derart ausgebildeten Gitterschicht kann der Beton die bikonvexe Form der Gitterelemente hinterfließen, sich dort ausbreiten und verhindert nach dem Aushärten ein Herausziehen des Gitters aus dem Ortbeton sicher und dauerhaft. Besonders bevorzugt werden eine bikonvexe Form aufweisende Gitterelemente in dem Fall eingesetzt, dass alle quer und alle längs verlaufenden Gitterelemente in derselben Ebene angeordnet sind.

Bevorzugt sind die Gitterelemente in zwei Ebenen übereinander angeordnet. Dabei verlaufen die in einer gemeinsamen Ebene angeordneten stabförmigen Gitterelemente bevorzugt im Wesentlichen parallel zueinander. In verschiedenen Ebenen angeordnete stabförmige Gitterelemente verlaufen in der Projektion von oben gesehen bevorzugt im rechten Winkel zueinander.

Die stabförmigen Gitterelemente weisen in allen Ausführungsformen im Schnitt senkrecht zu ihrer Hauptachse bevorzugt einen Durchmesser von 1 mm bis 5 mm, besonders bevorzugt von 2 mm bis 3 mm auf.

Im Falle von in zwei Ebenen übereinander angeordneten stabförmigen Gitterelementen entstehen über der der Gitterschicht zugewandten Oberfläche der textilen Schicht parallel zueinander verlaufende, in einer Längsrichtung ausgedehnte Gitterzellen. Da nur die in einer ersten Ebene angeordneten Gitterelemente mit der textilen Schicht in Kontakt stehen und die in einer zweiten Ebene angeordneten Gitterelemente nur mit den in der ersten Ebene angeordneten Gitterelementen in Kontakt stehen, werden die in einer Längsrichtung ausgedehnten Gitterzellen nur durch jeweils zwei der textilen Schicht benachbarte, parallel zueinander verlaufende, stabförmige Gitterelemente einerseits und durch die textile Schicht selbst andererseits begrenzt. In diese Gitterzellen dringt beim Vergießen Frischbeton ein, welcher unter den Gitterelementen der zweiten Ebene hindurchfließen kann, wodurch der Verbund von Flächenabdichtelement mit dem Beton noch weiter verstärkt wird.

Im Falle von in einer Ebene angeordneten stabförmigen Gitterelementen entstehen über der der Gitterschicht zugewandten Oberfläche der textilen Schicht Gitterzellen, die ausschließlich in einer von der textilen Schicht weg weisenden Richtung offen ausgebildet sind. Diese Gitterzellen werden durch jeweils vier der textilen Schicht benachbarte, stabförmige Gitterelemente einerseits und durch die textile Schicht selbst andererseits begrenzt. Durch diese Ausführungsform, für die bevorzugt bikonvex ausgebildete Gitterstäbe zum Einsatz kommen, wird die Hinterlaufsicherheit vorteilhafterweise noch weiter erhöht, da eindringendes Wasser die geschlossene Gitterzelle nicht verlassen kann. Dadurch ergibt sich zusätzlich zu dem bereits hinterlaufsicher ausgebildeten Klebeverbund eine weitere Verbesserung dieser Eigenschaft.

In allen beschriebenen Fällen sammelt sich in den Gitterzellen zum einen eine gewisse Menge an Klebstoff an und zum anderen dringt in die Gitterzellen Frischbeton beim Vergießen ein, welcher dann mit dem Klebstoff einen Verbund eingeht, wodurch eine ausgezeichnete Abdichtung erfolgt.

Zudem weist das erfindungsgemäße Flächenabdichtelement eine hohe Flexibilität auf, wodurch ein Aufwickeln und dadurch ein Transport in Form von Rollen ermöglicht werden. Vorzugsweise wird das erfindungsgemäße Flächenabdichtelement in Form von 50 Meter langen und 1,25 Meter bis 2,0 Meter breiten Bahnen auf Rollen aufgewickelt, wodurch das Gewicht einer einzelnen Rolle in einem Bereich bleibt, der eine einfache Handhabung auf der Baustelle ermöglicht. Vorzugsweise soll das Gewicht einer Rolle 50 kg nicht überschreiten.

Unter dem Ausdruck "mit Klebestoff getränkt" wird im Rahmen des vorliegenden Textes ein Zustand verstanden, bei dem die textile Schicht eine Menge an Klebstoff aufgenommen hat, die über oder zumindest nahe an der maximalen Aufnahmekapazität der textilen Schicht für den entsprechenden Klebstoff liegt. Wie bereits erläutert, sammelt sich an der der Gitterschicht zugewandten Oberfläche der textilen Schicht in den Durchbrechungen des Gitters eine gewisse Menge an Klebstoff an, welcher dann beim Vergießen des Ortbetons einen Verbund mit dem Frischbeton eingeht. Ein solches Austreten und Ansammeln von Klebstoff an der der Gitterschicht zugewandten Oberfläche erfolgt in jedem Fall dann, wenn der Auftrag des Klebstoff auf die der Gitterschicht abgewandten Oberfläche der textilen Schicht solange durchgeführt wird bis die Aufnahmekapazität der textilen Schicht für den entsprechenden Klebstoff überschritten wird. Aufgrund kinetischer Effekte kann es aber natürlich auch der Fall sein, dass eine ausreichende Menge an Klebstoff bereits zu einem Zeitpunkt austritt, zu dem noch keine Sättigung der textilen Schicht vorliegt. Somit umfasst der Ausdruck "mit Klebestoff getränkt" auch einen Zustand der textilen Schicht, bei dem noch keine Sättigung erreicht ist, aber Klebestoff bereits in ausreichender Menge austritt.

Erfindungsgemäß handelt es sich bei dem flächigen Träger um eine Kunststofffolie. Eine Kunststofffolie erfüllt das Erfordernis einer in ausreichendem Maße Gas- und Wasserundurchlässigkeit und weist vorteilhafterweise genügend Flexibilität auf, um ein Rollen des Flächenabdichtelements zu ermöglichen.

Besonders bevorzugt besteht die Kunststofffolie aus Polyvinylchlorid, Polyethylen, Polypropylen, Propylenoxid, Polyurethan, insbesondere thermoplastisches Polyurethan, oder einem thermoplastischen Elastomer auf Olefinbasis. Diese Kunststoffe weisen gute Eigenschaften bezüglich Abdichtung, Flexibilität und im Hinblick auf deren Verwendung in den nachfolgend noch näher beschriebenen Verfahren zur Herstellung des Flächenabdichtelements gemäß der vorliegenden Erfindung auf.

Vorteilhafterweise weist die Kunststofffolie eine Dicke von 300 µm bis 1500 µm, bevorzugt eine Dicke von 500 µm bis 800 µm auf. Eine Kunststofffolie dieser Dicke weist nicht nur eine ausreichende Gas- und Wasserundurchlässigkeit auf sondern besitzt auch genügend Flexibilität, um ein Rollen des Flächenabdichtelements zu ermöglichen.

Gemäß einer besonders bevorzugten Ausführungsform der vorliegenden Erfindung handelt es sich bei dem Klebstoff um Bitumen-Kautschuk, Butyl-Kautschuk, einen thermoplastischen Kunststoff, einen Schmelzkleber, insbesondere einen Polyolefinbasierten Schmelzkleber oder einem Gemisch aus diesen. Die genannten Klebstoffe erlauben eine Verwendung des Flächenabdichtelements gemäß der vorliegenden Erfindung in einem Temperaturbereich von -20°C bis +50°C, womit der gesamte, für einen Betoniervorgang denkbar Temperaturbereich abgedeckt wird.

Bevorzugt handelt es sich bei der textilen Schicht um ein Gewebe oder ein Vlies. Gewebe und Vliese sind zu günstigen Preisen verfügbar, weisen die erforderliche Flexibilität auf und stellen eine große spezifische Oberfläche zur Verfügung, an der der Klebstoff haften kann. Durch die in textilen Geweben und Vliesen vorhandenen, sehr kleinen Durchbrechungen kann Klebstoff durchtreten und steht an der der Gitterschicht zugewandten Oberfläche zur Anbindung an den Ortbeton zur Verfügung.

Besonders bevorzugt besteht das Gewebe oder das Vlies aus einem thermoplastischen Kunststoff. Diese Art von Kunststoffen weisen nicht nur die genannten positiven Eigenschaften bezüglich Preis, Flexibilität und spezifischer Oberfläche auf, sondern zeigen sich auch in den nachfolgend noch näher beschriebenen Verfahren zur Herstellung des Flächenabdichtelements gemäß der vorliegenden Erfindung als besonders vorteilhaft. Erfolgt eine Verbindung von textiler Schicht und Gitterschicht durch Flammkaschieren, so muss die textile Schicht in einer entsprechenden Dicke ausgebildet sein und aus einem Material mit entsprechendem Schmelzpunkt gefertigt sein.

Gemäß einer weiteren bevorzugten Ausführungsform der vorliegenden Erfindung besteht die Gitterschicht aus einem Kunststoff, insbesondere aus einem thermoplastischen Kunststoff. Wie nachfolgend noch beschrieben erfolgt die Verbindung von Gitter und textilem Träger bevorzugt durch Flammkaschierung. Dieses Verfahren lässt sich besonders einfach bei Einsatz von thermoplastischen Kunststoffen durchführen und führt bei Verwendung solcher Kunststoffe zu einer besonders festen und dauerhaften Verbindung von Gitter und textilem Träger. Besonders bevorzugt werden in diesem Zusammenhang Polyvinylchlorid, Polyethylen, Polypropylen, Propylenoxid, Polyurethan, insbesondere thermoplastisches Polyurethan, und thermoplastische Elastomere auf Olefinbasis als Material für die Gitterschicht.

Die vorliegende Erfindung umfasst auch ein Verfahren zur Herstellung eines der oben beschriebenen Flächenabdichtelemente. Das Verfahren umfasst die Schritte a) Bereitstellen eines flächigen Trägers, b) Bereitstellen eines textilen Flächengebildes, c) Bereitstellen eines flächigen, Durchbrechungen aufweisenden Gitters, wobei das Gitter aus sich kreuzenden, stabförmigen Gitterelementen aufgebaut ist, d) Verbinden des textilen Flächengebildes mit dem flächigen, Durchbrechungen aufweisenden Gitter, e) Durchtränken des textilen Flächengebildes mit Klebstoff, f) Verbinden des Klebstoff-getränkten textilen Flächengebildes mit dem flächigen Träger und g) Aushärten des Klebstoffs. Durch dieses Verfahren lassen sich die erfindungsgemäßen Flächenabdichtelemente schnell, einfach und kostengünstig herstellen.

Bei der Herstellung des erfindungsgemäßen Flächenabdichtelements wirkt sich die Tatsache als besonders vorteilhaft aus, dass der Klebstoff zwei Funktionen gleichzeitig erfüllt. Er sorgt nämlich nicht nur für den erforderlichen Verbund von Frischbeton und textilem Träger sondern bewirkt auch eine dauerhafte Verbindung von flächigem Träger und textiler Schicht, wodurch die Herstellung deutlich vereinfacht wird.

Zur Verbindung des textilen Flächengebildes mit dem flächigen, aus sich kreuzenden, stabförmigen Gitterelementen aufgebauten, Durchbrechungen aufweisenden Gitter kann das Gitter mit dem textilen Flächengebilde vernäht werden, wobei das Vernähen problemlos über die einzelnen, das Gitter aufbauenden Gitterelemente erfolgen kann. Die Verbindung des textilen Flächengebildes mit dem flächigen, Durchbrechungen aufweisenden Gitter kann aber auch bei erhöhter Temperatur erfolgen. Das Gitter wird dazu bis auf eine Temperatur knapp unter seinem Schmelzpunkt erhitzt. Dabei schmilzt die Oberfläche des Gitters an und das textile Flächengebilde kann bei dieser erhöhten Temperatur auf das Gitter gedrückt werden. Beim Wiederaushärten des Gitters entsteht eine feste Verbindung von Gitter und textilem Flächengebilde.

Gemäß einer weiteren Ausführungsform kann zum Verbinden des textilen Flächengebildes mit dem flächigen, Durchbrechungen aufweisenden Gitter das Gitter mit einer Vielzahl von Widerhaken ausgestattet werden. Wird das textile Flächengebilde in diesem Fall auf das Gitter gedrückt, so greifen die Widerhaken in das textile Flächengebilde ein und bewirken eine feste und dauerhafte Verbindung der beiden Elemente.

Das Durchtränken des textilen Flächengebildes mit Klebstoff erfolgt bevorzugt durch ein Aufsprühen oder Aufrollen des Klebstoffs auf das textile Flächengebilde. Dabei wird der Klebstoff auf die dem Gitter abgewandte Oberfläche des textilen Flächengebildes aufgetragen.

Besonders bevorzugt erfolgt das Durchtränken des textilen Flächengebildes mit Klebstoff solange bis sich in den Durchbrechungen des Gitters eine Klebstoffschicht bildet. Diese Klebstoffschicht steht dann für einen dauerhaften und festen Verbund mit dem Ortbeton zur Verfügung.

Das Verbinden des Klebstoff-getränkten textilen Flächengebildes mit dem flächigen Träger erfolgt bevorzugt durch ein Andrücken des flächigen Trägers an das textile Flächengebilde.

Nachfolgend wird das Flächenabdichtelement vorzugsweise in Form von 50 Meter langen und 1,25 Meter bis 2,0 Meter breiten Bahnen auf Rollen aufgewickelt, wodurch das Gewicht einer einzelnen Rolle in einem Bereich bleibt, der eine einfache Handhabung auf der Baustelle ermöglicht. Vorzugsweise soll das Gewicht einer Rolle 50 kg nicht überschreiten.

Die Größe von Bauwerken kann es erforderlich machen, zwei oder mehr Flächenabdichtelemente in gas- und/oder wasserdichter Weise zusammenzufügen. Um diesen Vorgang zu erleichtern, kann an einem Rand der Flächenabdichtelemente ein ca. 10 cm breiter Klebestoß vorgesehen werden, der lediglich aus dem flächigen Träger besteht, aber nicht mit der textilen Schicht und der Gitterschicht ausgestattet ist. Im Bereich des Klebestoßes kann ein Klebeauftrag per Hand auf der Baustelle erfolgen. Das nachfolgende Flächenabdichtelement kann auf diesen Klebestoß einfach aufgeklebt werden, was eine sichere Verbindung mehrere Flächenabdichtelemente gewährleistet.

Grundsätzlich ist ein Verlegen der Flächenabdichtelemente auch ohne Überlappungsbereich, also Stoß an Stoß möglich. Dazu wird beispielsweise eine dünne, reißfeste Folie mit Klebefläche unter dem Stoß angebracht und die angrenzenden Flächenabdichtelemente auf der Folie verklebt. Alternativ eignet sich zur sicheren Abdichtung des Stoßes auch ein Klebeband mit einer Butyloberfläche.

### Wege zur Ausführung der Erfindung

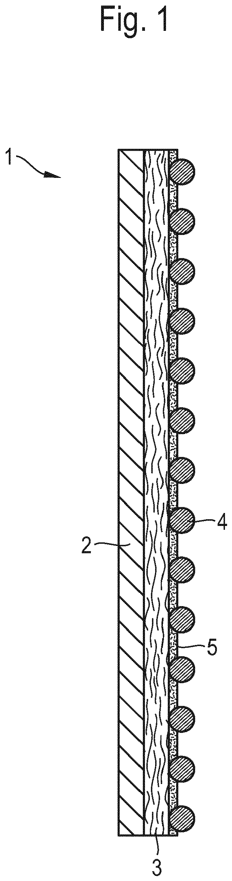

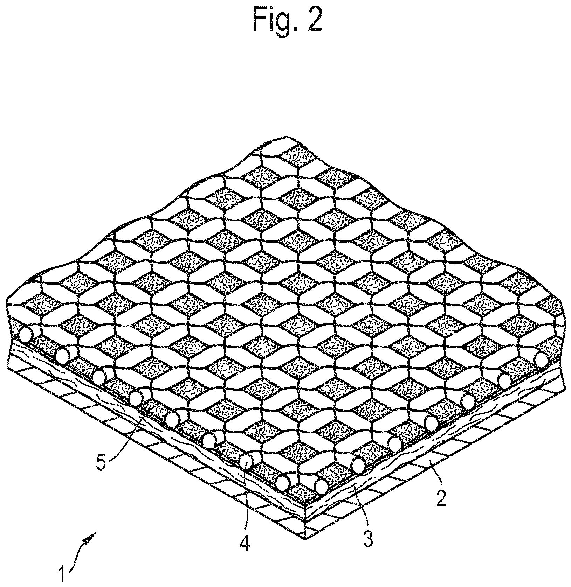

Die Erfindung soll nachfolgend anhand eines Ausführungsbeispiels im Zusammenhang mit den Zeichnungen näher erläutert werden. Die Figur 1 zeigt ein Ausführungsbeispiel eines erfindungsgemäßen Flächenabdichtelements 1 für Baukörper im Schnitt senkrecht zur Ebene des flächigen Trägers 2 in schematischer Darstellung. Die Figur 2 zeigt das Ausführungsbeispiel der Figur 1 in Draufsicht auf die Gitterschicht in schematischer Darstellung.
Figur 1 zeigt ein Flächenabdichtelement 1 mit einer Polyethylenfolie 2 als Beispiel für einen flächigen Träger. Auf der Polyethylenfolie 2 ist ein Vlies 3 aus einem thermoplastischen Kunststoff als textile Schicht aufgeklebt. Das Vlies 3 ist mit einem Schmelzklebstoff getränkt. Auf der der Polyethylenfolie 2 abgewandten Oberfläche des Vlieses 3 ist eine Gitterschicht 4 aus thermoplastischen Polyurethan angeordnet. Die Gitterschicht 4 weist Durchbrechungen auf, in denen sich eine Schicht aus Schmelzklebstoff 5 ansammelt. In der Figur 1 ist nur der Teil des Schmelzklebstoffs 5 gezeigt, der sich an der Oberfläche des Vlieses 3 angesammelt hat. Wie bereits erwähnt, ist das Vlies 3 selbst mit dem Klebstoff getränkt. Dieser Anteil des Klebstoffs ist in dem Vlies 3 enthalten und in der Figur 1 nicht dargestellt.
Die Figur 2 zeigt das Ausführungsbeispiel der Figur 1 in Draufsicht auf die Gitterschicht in schematischer Darstellung. Gezeigt ist die aus sich kreuzenden, stabförmigen Gitterelementen aufgebaute Gitterschicht 4. Zwischen den einzelnen stabförmigen Gitterelementen ist der Schmelzklebstoffs 5 dargestellt, der sich an der Oberfläche des Vlieses 3 angesammelt hat.

### Bezugszeichenliste

- 1: Flächenabdichtelement
- 2: Polyethylenfolie
- 3: Vlies
- 4: Gitterschicht
- 5: Schmelzklebstoff

## Patentansprüche

1. Flächenabdichtelement (1) für Baukörper aufweisend einen flächigen Träger (2), wobei es sich bei dem flächigen Träger (2) um eine Kunststofffolie handelt, eine auf dem flächigen Träger (2) aufgeklebte, mit Klebstoff (5) getränkte, textile Schicht (3) und eine auf der dem flächigen Träger (2) abgewandten Oberfläche der textilen Schicht (3) angeordnete, Durchbrechungen aufweisende Gitterschicht (4), wobei die Gitterschicht (4) aus sich kreuzenden, stabförmigen Gitterelementen aufgebaut ist.

2. Flächenabdichtelement (1) nach Anspruch 1, **dadurch gekennzeichnet, dass** die Kunststofffolie aus Polyvinylchlorid, Polyethylen, Polypropylen, Propylenoxid, Polyurethan, insbesondere thermoplastisches Polyurethan, oder einem thermoplastischen Elastomer auf Olefinbasis besteht.

3. Flächenabdichtelement (1) nach Anspruch 2, **dadurch gekennzeichnet, dass** die Kunststofffolie (2) eine Dicke von 300 µm bis 1500 µm, bevorzugt eine Dicke von 500 µm bis 800 µm aufweist.

4. Flächenabdichtelement (1) nach einem der Ansprüche 1 bis 3, **dadurch gekennzeichnet, dass** es sich bei dem Klebstoff (5) um Bitumen-Kautschuk, Butyl-Kautschuk, einen thermoplastischen Kunststoff, einen Schmelzkleber, insbesondere einen polyolefinbasierten Schmelzkleber oder einem Gemisch aus diesen handelt.

5. Flächenabdichtelement (1) nach einem der Ansprüche 1 bis 4, **dadurch gekennzeichnet, dass** es sich bei der textilen Schicht um ein Gewebe oder ein Vlies handelt.

6. Flächenabdichtelement (1) nach Anspruch 5, **dadurch gekennzeichnet, dass** das Gewebe oder das Vlies aus einem thermoplastischen Kunststoff besteht.

7. Flächenabdichtelement (1) nach einem der Ansprüche 1 bis 6, **dadurch gekennzeichnet, dass** die Gitterschicht (3) aus einem Kunststoff, insbesondere aus einem thermoplastischen Kunststoff besteht.

8. Flächenabdichtelement (1) nach Anspruch 7, **dadurch gekennzeichnet, dass** es sich bei dem Kunststoff um Polyvinylchlorid, Polyethylen, Polypropylen, Propylenoxid, Polyurethan, insbesondere thermoplastisches Polyurethan, oder um ein thermoplastisches Elastomer auf Olefinbasis handelt.

9. Flächenabdichtelement (1) nach einem der Ansprüche 1 bis 8, **dadurch gekennzeichnet, dass** die die Gitterschicht aufbauenden stabförmigen Gitterelemente im Schnitt senkrecht zur Gitterebene und senkrecht zur Hauptachse des Gitterelements eine bikonvexe Form aufweisen.

10. Verfahren zur Herstellung eines Flächenabdichtelements (1) gemäß den Ansprüchen 1 bis 9 mit den Schritten
a) Bereitstellen eines flächigen Trägers (2), wobei es sich bei dem flächigen Träger (2) um eine Kunststofffolie handelt,
b) Bereitstellen eines textilen Flächengebildes (3),
c) Bereitstellen eines flächigen, Durchbrechungen aufweisenden Gitters (4), wobei das Gitter (4) aus sich kreuzenden, stabförmigen Gitterelementen aufgebaut ist,
d) Verbinden des textilen Flächengebildes (3) mit dem flächigen, Durchbrechungen aufweisenden Gitter (4),
e) Durchtränken des textilen Flächengebildes (3) mit Klebstoff (5),
f) Verbinden des Klebstoff-getränkten textilen Flächengebildes (3) mit dem flächigen Träger (2),
g) Aushärten des Klebstoffs (5).

11. Verfahren nach Anspruch 10, **dadurch gekennzeichnet, dass** zum Verbinden des textilen Flächengebildes (3) mit dem flächigen, Durchbrechungen aufweisenden Gitter (4) das Gitter mit dem textilen Flächengebilde vernäht wird.

12. Verfahren nach einem der Ansprüche 10 oder 11, **dadurch gekennzeichnet, dass** zum Verbinden des textilen Flächengebildes (3) mit dem flächigen, Durchbrechungen aufweisenden Gitter (4) das Gitter bis auf eine Temperatur knapp unter seinem Schmelzpunkt erhitzt wird und das textile Flächengebilde bei dieser erhöhten Temperatur auf das Gitter gedrückt wird.

13. Verfahren nach einem der Ansprüche 10 bis 12, **dadurch gekennzeichnet, dass** zum Verbinden des textilen Flächengebildes (3) mit dem flächigen, Durchbrechungen aufweisenden Gitter (4) das Gitter mit einer Vielzahl von Widerhaken ausgestattet wird und das textile Flächengebilde auf das Gitter gedrückt wird, wobei das textile Flächengebilde durch die Widerhaken an dem Gitter gehalten wird.

14. Verfahren nach einem der Ansprüche 10 bis 13, **dadurch gekennzeichnet, dass** das Durchtränken des textilen Flächengebildes (3) mit Klebstoff (5) durch ein Aufsprühen oder Aufrollen des Klebstoffs (5) auf das textile Flächengebilde (3) erfolgt, wobei der Klebstoff (5) auf die dem Gitter (4) abgewandte Oberfläche des textilen Flächengebildes (3) aufgetragen wird.

15. Verfahren nach Anspruch 14, **dadurch gekennzeichnet, dass** das Durchtränken des textilen Flächengebildes (3) mit Klebstoff (5) solange erfolgt bis sich in den Durchbrechungen des Gitters (4) eine Klebstoffschicht bildet.

16. Verfahren nach einem der Ansprüche 10 bis 15, **dadurch gekennzeichnet, dass** das Verbinden des Klebstoff-getränkten textilen Flächengebildes (3) mit dem flächigen Träger (2) durch ein Andrücken des flächigen Trägers (2) an das textile Flächengebilde (3) erfolgt.

## Claims

1. Surface sealing element (1) for building objects, comprising a flat support (2), wherein the flat support (2) is a plastic film, a textile layer (3) which is impregnated with adhesive (5) and bonded adhesively to the flat support (2), and a mesh layer (4) with perforations arranged on the surface of the textile layer (3) facing away from the flat support (2), wherein the mesh layer (4) is constructed from intersecting, rod-like mesh elements.

2. Surface sealing element (1) according to claim 1, **characterized in that** the plastic film consists of polyvinyl chloride, polyethylene, polypropylene, propylene oxide, polyurethane, particularly thermoplastic polyurethane, or an olefin-based thermoplastic elastomer.

3. Surface sealing element (1) according to claim 2, **characterized in that** the plastic film (2) has a thickness from 300 µm to 1500 µm, preferably a thickness from 500 µm to 800 µm.

4. Surface sealing element (1) according to one of claims 1 to 3, **characterized in that** the adhesive (5) is bitumen rubber, butyl rubber, a thermoplastic resin, a hot melt adhesive, in particular a polyolefin-based hot melt adhesive or a mixture thereof.

5. Surface sealing element (1) according to one of claims 1 to 4, **characterized in that** the textile layer is a woven fabric or a non-woven material.

6. Surface sealing element (1) according to claim 5, **characterized in that** the woven fabric or non-woven material consists of a thermoplastic plastic material.

7. Surface sealing element (1) according to any one of claims 1 to 6, **characterized in that** the mesh layer (3) consists of a plastic, particularly a thermoplastic plastic material.

8. Surface sealing element (1) according to claim 7, **characterized in that** the plastic is polyvinyl chloride, polyethylene, polypropylene, propylene oxide, polyurethane, particularly thermoplastic polyurethane, or an olefin-based thermoplastic elastomer.

9. Surface sealing element (1) according to any one of claims 1 to 8, **characterized in that** the rod-like mesh elements which form the mesh layer have a biconvex shape in cross section perpendicular to the plane of the mesh and perpendicular to the primary axis of the mesh element.

10. Method for producing a surface sealing element (1) according to claims 1 to 9 comprising the steps of
a) providing a flat support (2), wherein said flat support (2) is a plastic film,
b) providing a textile sheet material (3),
c) providing a flat mesh (4) having perforations, wherein the mesh (4) is constructed from intersecting rod-like mesh elements,
d) attaching the textile sheet material (3) to the perforated flat mesh (4),
e) impregnating the textile sheet material (3) with adhesive (5),
f) bonding the adhesive-impregnated textile sheet material (3) to the flat support (2),
g) curing the adhesive (5).

11. Method according to claim 10, **characterized in that** in order to attach the textile sheet material (3) to the flat, perforated mesh (4) the mesh is sewn to the textile sheet material.

12. Method according to either of claims 10 or 11, **characterized in that** in order to attach the textile sheet material (3) to the flat, perforated mesh (4) the mesh is heated to a temperature just below its melting point and the textile sheet material is pressed against the mesh at this elevated temperature.

13. Method according to any one of claims 10 to 12, **characterized in that** in order to attach the textile sheet material (3) to the flat, perforated mesh (4) the mesh is furnished with a plurality of barbs and the textile sheet material is pressed against the mesh, wherein the textile sheet material is held on the mesh by the barbs.

14. Method according to any one of claims 10 to 13, **characterized in that** the textile sheet material (3) is impregnated with adhesive (5) by spraying or rolling the adhesive (5) onto the textile sheet material (3), wherein the adhesive (5) is applied to the surface of the textile sheet material (3) facing away from the mesh (4).

15. Method according to claim 14, **characterized in that** the impregnation of the textile sheet material (3) with adhesive (5) continues until an adhesive layer forms in the perforations of the mesh (4).

16. Method according to any one of claims 10 to 15, **characterized in that** the adhesive-impregnated textile sheet material (3) is bonded to the flat support (2) by pressing the flat support (2) against the textile sheet material (3).

## Revendications

1. Élément d'étanchéité de surface (1) pour corps de construction, présentant un support surfacique (2), sachant que le support surfacique (2) est un film en plastique, une couche textile (3) collée sur le support surfacique (2) et imprégnée de colle (5) et une couche grillagée (4) disposée sur la surface détournée du support surfacique (2) de la couche textile (3) et présentant des percées, la couche grillagée (4) étant composée d'éléments de grille se croisant en forme de barres.

2. Élément d'étanchéité de surface (1) selon la revendication 1, **caractérisé en ce que** le film en plastique est composé de chlorure de polyvinyle, polyéthylène, polypropylène, propylène oxyde, polyuréthane, en particulier polyuréthane thermoplastique, ou d'un élastomère thermoplastique à base d'oléfine.

3. Élément d'étanchéité de surface (1) selon la revendication 2, **caractérisé en ce que** le film en plastique (2) présente une épaisseur de 300 µm à 1500 µm, de préférence une épaisseur de 500 µm à 800 µm.

4. Élément d'étanchéité de surface (1) selon une des revendications 1 à 3, **caractérisé en ce que** la colle (5) est du bitume caoutchouc, du butyle caoutchouc, un plastique thermoplastique, une colle à fusion, en particulier une colle à fusion à base de polyoléfine ou un mélange de ceux-ci.

5. Élément d'étanchéité de surface (1) selon une des revendications 1 à 4, **caractérisé en ce que** la couche textile est un tissu ou un non-tissé.

6. Élément d'étanchéité de surface (1) selon la revendication 5, **caractérisé en ce que** le tissu ou le non-tissé est composé d'un plastique thermoplastique.

7. Élément d'étanchéité de surface (1) selon une des revendications 1 à 6, **caractérisé en ce que** la couche grillagée (3) est composée d'un plastique, en particulier d'un plastique thermoplastique.

8. Élément d'étanchéité de surface (1) selon la revendication 7, **caractérisé en ce que** le plastique est du chlorure de polyvinyle, polyéthylène, polypropylène, propylène oxyde, polyuréthane, en particulier polyuréthane thermoplastique, ou un élastomère thermoplastique à base d'oléfine.

9. Élément d'étanchéité de surface (1) selon une des revendications 1 à 8, **caractérisé en ce que** les éléments de grille en forme de barres constituant la couche grillagée présentent une forme biconvexe en coupe perpendiculaire au plan de la grille et perpendiculaire à l'axe principal de l'élément grillagé.

10. Procédé de fabrication d'un élément d'étanchéité de surface (1) selon une des revendications 1 à 9, comportant les étapes suivantes :
a) mise à disposition d'un support surfacique (2), le support surfacique (2) étant un film en plastique,
b) mise à disposition d'une structure surfacique textile (3),
c) mise à disposition d'une grille surfacique (4) présentant des percées, la grille (4) étant constituée d'éléments de grille se croisant et en forme de barres,
d) connexion de la structure surfacique textile (3) à la grille surfacique (4) présentant des percées,
e) imprégnation de la structure surfacique textile (3) avec de la colle (5),
f) connexion de la structure surfacique textile (3) imprégnée de colle au support surfacique (2),
g) durcissement de la colle (5).

11. Procédé selon la revendication 10, **caractérisé en ce que**, pour connecter la structure surfacique textile (3) à la grille surfacique (4) présentant des percées, la grille est cousue à la structure surfacique textile.

12. Procédé selon une des revendications 10 ou 11, **caractérisé en ce que**, pour connecter la structure surfacique textile (3) à la grille surfacique (4) présentant des percées, la grille est chauffée jusqu'à une température juste en dessous de son point de fusion et la structure surfacique textile est comprimée sur la grille à cette température accrue.

13. Procédé selon une des revendications 10 à 12, **caractérisé en ce que**, pour connecter la structure surfacique textile (3) à la grille surfacique (4) présentant des percées, la grille est équipée d'une multitude de barbillons et la structure surfacique textile est comprimée sur la grille, la structure surfacique textile étant maintenue au niveau de la grille par les barbillons.

14. Procédé selon une des revendications 10 à 13, **caractérisé en ce que** l'imprégnation de la structure surfacique textile (3) avec de la colle (5) se fait par pulvérisation ou application au rouleau de la colle (5) sur la structure surfacique textile (3), la colle étant appliquée sur la surface détournée de la grille (4) de la structure surfacique textile (3).

15. Procédé selon la revendication 14, **caractérisé en ce que** l'imprégnation de la structure surfacique textile (3) avec de la colle (5) a lieu jusqu'à ce qu'une couche de colle se forme dans les percées de la grille (4).

16. Procédé selon une des revendications 10 à 15, **caractérisé en ce que** la connexion de la structure surfacique textile (3) avec le support surfacique (2) se fait en comprimant le support surfacique (2) sur la structure surfacique textile (3).
